# EUROPEAN PATENT SPECIFICATION

(11) **EP 1 643 158 B1**
(45) Date of publication and mention of the grant of the patent: **23.04.2008**
(21) Application number: 05020176.3
(22) Date of filing: 16.09.2005
(51) Int. Cl.: F16G 1/28

(54) **Toothed belt**
Zahnriemen
Courroie à dents

(30) Priority: 29.09.2004 JP 2004284806
(43) Date of publication of application: 05.04.2006
(73) Proprietor: Tsubakimoto Chain Co., Kita-ku Osaka 530-0005 (JP)
(72) Inventor: Tomobuchi, Masato c/o Tsubakimoto Chain Co.,, 3-3-3, Nakanoshima, Kita-ku, Osaka 530-0005, (JP); Kikuchi, Hiroshi c/o. Tsubakimoto Chain Co.,, 3-3-3, Nakanoshima, Kita-ku, Osaka 530-0005, (JP)
(74) Representative: Patentanwälte Hosenthien-Held und Dr. Held

(56) References cited:
- EP-A1- 0 674 121
- EP-A2- 0 678 687
- JP-A- 61 140 640
- JP-A- 2002 340 099
- US-A1- 2001 051 555
- US-B1- 6 375 590

## Description

The present invention relates to a toothed belt used for power transmission.

A toothed belt is usually trained between a driving toothed pulley and a driven toothed pulley and has been used as a power transmitting belt for general industrial equipment or OA (Office Automation) equipment, a timing belt for an automobile internal-combustion engine, a driving belt for a bicycle or motorcycle, and the like. The toothed belt usually comprises a black carbon containing belt body rubber layer in which a plurality of core strands are buried in the longitudinal direction of the belt. A plurality of teeth portions may be formed on a surface of this belt body rubber layer and a tooth cloth may be formed on the surface of the teeth portions in a coating manner.

Since a conventional toothed belt is black because carbon is formulated or compounded in a belt body rubber layer as a reinforcing agent, the outer appearance of the belt may not be desirable. Furthermore, black wear powders are generated during use, such as by contact with a toothed pulley during travel of the belt, which can soil peripheral equipment. Additionally, when the toothed belt is used for a long period of time, a tooth cloth may become soiled black and wear so that a tooth cut is generated which may lead to a fracture or break. Indeed, since the belt body rubber layer is black, the wear state of a tooth cloth, which is also black, cannot be visually found. Accordingly, the life of the belt cannot be judged visually and the opportunity to properly replace the belt may be missed.

Additionally, carbon-black formulated toothed belts may not meet water resistance, weather resistance, and other standards.

In view of the above-mentioned problems, a colored toothed belt in which a belt body rubber layer of a toothed belt is colored with at least one color other than black has been described (see Japanese Utility Model Publication No. Hei. 7-4358 and Japanese Laid-open Patent Publication No. 2003-96292). Further, a toothed belt whose strength is improved has also been proposed (see Japanese Laid-open Patent Publication No. 2000-297846). Japanese Utility Model Publication No. Hei. 7-4358 discloses a colored toothed belt with a belt body rubber layer comprised of a rubber composition comprising white carbon in a chloroprene rubber as a reinforcing agent and a coloring pigment. Japanese Laid-open Patent Publication No. 2003-96292 discloses a colored toothed belt with a belt body rubber layer comprised of a colored urethane rubber comprising a coloring pigment or a thermochromic capsule, which changes a color, in polyurethane. Japanese Laid-open Patent Publication No. 2000-297846 discloses a black toothed belt in which carbon black is formulated into a mixed polymer comprising a hydrogenated nitrile rubber (HNBR) and a polymer alloy (ZSC) in which zinc polymethacrylate is finely distributed into a hydrogenated nitrile rubber.

The US 6,375,590 B1 discloses a toothed belt comprising a plurality of teeth portions on at least one surface of a belt body rubber layer and a tooth cloth coated on the surface of said plurality of teeth portions. The belt body rubber layer comprises a plurality of buried core strands in the longitudinal direction of the belt. Further, the belt body rubber layer comprises a rubber composition comprising a mixed polymer, comprising a hydrogenated nitrile rubber and zinc polymethacrylate. The ratio of zinc polymethacrylate to hydrogenated nitrile rubber ranges from 22:78 to 45:55 parts per weight. The iodine value of the hydrogenated nitrile rubber is 4 to 28 g.

The rubber composition is preferably formed of a polymer alloy composite material and hydrogenated nitrile rubber having an iodine value of 4 to 28 g which are blended together in a ration of 55:45 to 90: 10 parts by weight. The polymer alloy composite material is formed of zinc polymethacrylate and hydrogenated nitrile rubber having an iodine value of 4 to 28 g which are dispersed in a ratio of 40:60 to 50:50 parts by weight.

The polymer alloy composite material is prepared, then the hydrogenated nitrile rubber is added to the polymer alloy composite material, so that before vulcanization is carried out, the zinc polymethycrylate can be homogeneously dispersed in the hydrogenated nitrile rubber, leading to formation of a cured rubber belt body having a fine, higher-order network structure. To the rubber composition, peroxide and carbon black are added as a vulcanizing agent.

The use of colored toothed belts is known e.g. from the JP 2002-340099 A, EP 0 678 687 A2 or JP 61-140640 A.

According to one aspect of the instant invention, a toothed belt is provided comprising a plurality of teeth portions on at least one surface of a belt body rubber layer, in which a plurality of core strands are buried in the longitudinal direction of the belt. A tooth cloth is coated on the surface of the teeth portions. The belt body rubber layer comprises a rubber composition in which a mixed polymer is obtained by formulating a polymer alloy into which zinc polymethacrylate is finely distributed in a hydrogenated nitrile rubber and ethylene-vinyl acetate copolymer in a range of 5:95 to 95:5 parts by weight, and is crosslinked by an organic peroxide. The hydrogenated nitrile rubber has an iodine value of 4 to 56 g, the polymer alloy has a Mooney value of at least 70 at 100°C, the ethylene-vinyl acetate copolymer has an amount of vinyl acetate of 40 to 91% and a Mooney value of 20 to 70 at 100°C, and the body rubber layer is colored black or at least one color other than black.

In accordance with another aspect of the instant invention, a toothed belt is provided wherein the belt body rubber layer comprises a rubber composition in which a mixed polymer is obtained by formulating a hydrogenated nitrile rubber, a polymer alloy into which zinc polymethacrylate is finely distributed in a hydrogenated nitrile rubber in a range of 80:20 to 5:95 parts by weight and ethylene-vinyl acetate copolymer in the polymer alloy is in a range of 5:95 to 95:5, and crosslinking by an organic peroxide. The hydrogenated nitrile rubber has an iodine value of 4 to 56 g, the polymer alloy has a Mooney value of at least 70 at 100°C, the ethylene-vinyl acetate copolymer has an amount of vinyl acetate of 40 to 91 % and a Mooney value of 20 to 70 at 100°C, and the belt body rubber layer is colored black or at least one color other than black.

In yet another aspect of the instant invention, the belt body rubber layer may comprise 5 to 40 parts by weight of calcium carbonate, 5 to 20 parts by weight of silica, and 5 to 50 parts by weight of titanium oxide with respect to 100 parts by weight of the mixed polymer. The calcium carbonate may be subjected to fatty acid treatment and calcium and magnesium composite carbonate may be subjected to resin acid treatment.

In yet another embodiment, the treated tooth cloth is comprised of an original canvas made of single nylon 6, nylon 66, aramide fiber, poly-para-phenylene benzoxazlole fiber or the like or a mixture thereof.

In still another embodiment of the instant invention, the belt body rubber layer may comprise 0.5 to 5 parts by weight of organic peroxide with respect to 100 parts by weight of the mixed polymer. The organic peroxide may be selected from the group consisting of ethylene dimethacrylate, trimethylolpropane trimethacrylate, N,N'-m-phenylene dimaleimide, and triallyl cyanurate.
- Figure 1: is a partially cut out perspective view of a toothed belt of the present invention wherein 1 represents a toothed belt, 2 represents a core strand, 3 represents a belt body rubber layer, 4 represents a tooth portion, 5 represents a belt body, and 6 represents a tooth cloth.
- Figures 2A and 2B: are schematic explanatory views of the Goodrich Flexometer test. Figure 2A is a schematic view of a sample 7 having a diameter of 19.1 mm and a height 9 of 25.4 mm. Figure 2B is a schematic view of the Goodrich Flexometer test. 10 represents a constant temperature bath, 11 represents a thermocouple for measuring the temperature in the constant temperature bath, 12 represents a thermocouple for measuring self-heat generation, and 13 represents the compression of the sample.
- Figure 3: is a schematic view of a layout for the tooth jumping torque test. 14 represents a driving pulley and 15 represents a driven pulley.
- Figure 4: is a schematic view of a layout for the load endurance test. 16 represents a driven pulley with a shaft load torque of 41 N·m.
- Figure 5: is a schematic view of a layout for the water injection load endurance test. 17 represents a water injection bath, 18 represents a water injection pump, 19 represents water, and 20 represents a filter.
- Figure 6: is a schematic view of a layout for the oil injection load endurance test. 21 represents an oil injection bath, 22 represents an oiler, and 23 represents an oil recovery tank.

The colored toothed belts disclosed Japanese Utility Model Publication No. Hei. 7-4358 have a belt body rubber layer formed of rubber in which white carbon formulated in chloroprene. The rigidity of the tooth portion of this belt is small. Accordingly, the dynamic properties (fatigue properties to repeatedly applied force during high load and high speed rotation) may be poor and as such there are problems pertaining to the strength and endurance of the toothed belt. The colored toothed belt disclosed in Japanese Laid-open Patent Publication No. 2003-96292 has a belt body rubber layer made of a urethane rubber. Significantly, a urethane rubber for a toothed belt often has a large temperature dependency. Indeed, when the temperature rises during high load and high speed rotation, the urethane rubber is softened. Furthermore, permanent strain and repeated fatigue generates cracking of the rubber resulting in tooth cut out and fracture or break. Since the toothed belt disclosed in Japanese Laid-open Patent Publication No. 2000-297846 is a black belt in which a belt body rubber layer is obtained by formulating carbon black in a mixed polymer comprising a hydrogenated nitrile rubber and a polymer alloy in which zinc polymethacrylate is finely distributed to a hydrogenated nitrile rubber, black wear powders are generated during operation and soils peripheral equipment. Furthermore, when the toothed belt is used for a long period of time, the tooth cloth is soiled black and the wear state cannot be visually determined, thereby preventing timely exchange time of the belt.

The present invention solves the above-described shortcomings above-described toothed belts. The belts of the instant invention hold the same or greater strength and dynamic properties (fatigue resistance to repeated force during high load and high speed rotation) as those of a black toothed belt comprising a carbon black-formulated rubber composition, but possess a belt body rubber layer which does not comprise carbon black as a reinforcing agent and which can be colored in a color or colors other than black. Additionally, the outer appearance of the belts of the instant invention can be used to visually determine the wear state of the tooth cloth.

Furthermore, the toothed belts of the instant invention provide superior weather resistance (e.g., when they are used outdoors such as in a bicycle) by formulating with EVM (ethylene-vinyl acetate copolymer). The toothed belts of the present invention also provide superior oil resistance compared to conventional rubber belts. Notably, formulating EVM and HNBR (hydrogenated nitrile rubber) may be more cost effective than the case of formulation of pure HNMR or HNBR + ZSC (polymer alloy in which zinc methacrylate is finely distributed to a hydrogenated nitrile rubber).

According to the instant invention, the belt body rubber layer may comprise a rubber composition in which a polymer alloy in which zinc polymethacrylate (ZSC) is finely distributed in a hydrogenated nitrile rubber and ethylene-vinyl acetate copolymer (EVM). The belt may be colored by a black color or a color or colors other than black. The rubber can also be employed to generate a high performance toothed belt which exhibits water resistance, ozone resistance, weather resistance, high rigidity, wear resistance, and superior dynamic properties.

Alternatively, the belt body rubber layer may comprise a rubber composition consisting of hydrogenated nitrile rubber (HNBR), a polymer alloy in which zinc polymethacrylate is finely distributed in a hydrogenated nitrile rubber, and an ethylene-vinyl acetate copolymer (EVM). A toothed belt comprising this belt body rubber may be colored black or a color or colors other than black.

According to another aspect of the invention, the belt body rubber layer may comprise 5 to 40 parts by weight of calcium carbonate, 5 to 20 parts by weight of silica, and 5 to 50 parts by weight of titanium oxide with respect to 100 parts by weight of the mixed polymer. The calcium carbonate may be subjected to fatty acid treatment and calcium and magnesium composite carbonate may be subjected to resin acid treatment. This rubber demonstrates improved workability and dimensional stability. Furthermore, a coloring agent may be formulated in the rubber composition to achieve an appropriately colored toothed belt. In the case where the belt body rubber layer and the tooth cloth are different colors, wear of the tooth cloth can be visually recognized during operation so that a life of the toothed belt can be easily judged.

Belt body rubber layer of the instant invention may also comprise 0.5 to 5 parts by weight of organic peroxide with respect to 100 parts by weight of the mixed polymer. The organic peroxide can be selected from the group consisting of ethylene dimethacrylate, trimethylolpropane trimethacrylate, N, N'-m-phenylene dimaleimide, triallyl cyanurate, and the like.

When the above-described colored rubbers are used as a belt body rubber layer of a toothed belt, superior transmission performance can be obtained as compared to conventional belts. The instant rubber compositions allow for a more compact design than a conventional product. Additionally, color coding a belt in an area where use/friction occurs is important to help easily determine tooth cloth wear and belt life. Accordingly, the present invention provides a new high performance toothed belt which can be a color other than black. The belts can be used at higher speed rotation than urethane belts, at higher temperatures, and outdoors or in atmosphere where water splashes.

The present invention used, as a belt body rubber layer forming a toothed belt, a rubber composition obtained by formulating a rubber reinforcing agent such as white carbon (silica), calcium carbonate or the like in a mixed polymer containing a polymer alloy (ZSC) in which zinc polymethacrylate is finely distributed to a hydrogenated nitrile rubber, and optionally by formulating or compounding ethylene-vinyl acetate copolymer (EVM) and crosslinking the formulations with an organic peroxide. Since carbon black is not formulated or compounded in this rubber composition, a coloring agent other than black can be formulated in the belt body rubber layer to obtained a color other than black.

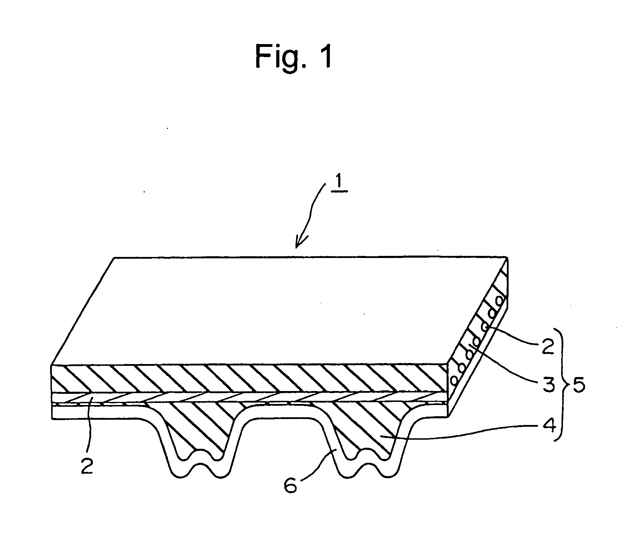

A toothed belt 1 according to the present invention is shown in Figure 1. The toothed belt 1 is constructed by a process, in which a plurality of teeth portions 4 are formed on a surface of a belt body rubber layer 3 in which a plurality of core strands 2 are buried in the longitudinal direction of the belt. A tooth cloth 6 is coated on the surface of the teeth portions 4 of the belt body 5.

The core strand 2 may comprise a synthetic fiber cord in which an adhesive (for example, RFL liquid, whose latex L is HNBR) is impregnated into multifilament yarns (e.g., polyamide fibers, aramide fibers, polyester fibers or the like), a glass cord in which an adhesive (for example, RFL liquid, whose latex L is HNBR) is impregnated into multifilament yarns (e.g., E glass fibers, high strength glass fibers or the like), or the like.

The tooth cloth 6 may be a tooth cloth woven by synthetic fiber yarns in an appropriate cloth construction and subjected to RFL (for example RFL in which a latex L is HNBR) treatment. In this case, the tooth cloth is subjected to RFL treatment, dried, and then subjected to dipping treatment with a solution in which an organic peroxide crosslinking agent is dissolved in an organic solvent. Alternatively, it may be subjected to a spreading treatment wherein the solution comprising the latex L in the RFL composition and the organic peroxide crosslinking agent are reacted with each other so that the tooth cloth is strengthened by a crosslinked film. Thus, the toothed belt comprising this tooth cloth 6 has improved endurance, wear resistance, flex resistance, heat resistance, and water resistance. In this case, the RFL liquid treatment colors the tooth cloth in reddish brown.

The toothed belt 1 may be manufactured as follows. The tooth cloth 6 can be wound around an outer surface of a cylindrical mold having a tooth portion forming groove so that a crosslinked film is positioned on a cylindrical mold side. A core strand 2 is then wound on the structure spirally at a fixed tension and a non-vulcanized rubber sheet comprising a rubber composition, which will be a belt body rubber layer 3, is wound thereon. Subsequently, the obtained structure is placed into a vulcanizing can and is pressurized from the outer peripheral side and heated with vapor. Then the rubber of the toothed belt 1 is softened by pressurization and heating, whereby teeth portions 4 are formed and the tooth cloth 6 is adhered to the surface side of the tooth portion. The structure is then vulcanized so that the toothed belt is manufactured.

The belt body rubber layer 3 according to the present invention may comprise a rubber composition in which a mixed polymer obtained by formulating or compounding a polymer alloy (ZSC) into which zinc polymethacrylate is finely distributed in a hydrogenated nitrile rubber and ethylene-vinyl acetate copolymer in a range of 5:95 to 95:5 parts by weight, and is crosslinked by an organic peroxide. The formulation ratio of a polymer alloy (ZSC) to ethylene-vinyl acetate copolymer (EVM) is defined as 5:95 to 95:5 parts by weight in the mixed polymer because if the polymer alloy (ZSC) is less than 5 parts by weight or exceeds 95 parts by weight, the rigidity, strength, fatigue resistance, workability, water resistance, weather resistance and the like of the belt body, particularly the tooth portion, are lowered such that a high strength toothed belt cannot be obtained.

Alternatively, the belt body rubber layer 3 according to the present invention may comprise a rubber composition in which a mixed polymer obtained by formulating or compounding a hydrogenated nitrile rubber (HNBR), a polymer alloy (ZSC) into which zinc polymethacrylate is finely distributed in a hydrogenated nitrile rubber in a range of 80:20 to 5:95 parts by weight and ethylene-vinyl acetate copolymer in the polymer alloy in a range of 5:95 to 95:5, and is crosslinked by an organic peroxide. Here, the reason why in the mixed polymer the formulation or compounding ratio of a polymer alloy (ZSC) to ethylene-vinyl acetate copolymer (EVM) is defined as 5:95 to 95:5 parts by weight is that if the polymer alloy (ZSC) is less than 5 parts by weight or exceeds 95 parts by weight, the strength, particularly with regard to tooth cutting out resistance and fatigue resistance, are lowered so that a high strength toothed belt cannot be obtained.

In the belt body rubber layer 3, the rubber composition may be obtained by formulating calcium carbonate in a range of 5 to 40 parts by weight, silica in a range of 5 to 20 parts by weight, and titanium oxide in a range of 5 to 50 parts by weight with respect to 100 parts by weight of a mixed polymer. The reason why such ranges were defined is that if calcium carbonate, silica and titanium oxide are outside the identified ranges, the dimensional stability at working of a non-vulcanized rubber sheet and dimensional stability of the belt body after vulcanization 5 are lowered.

In the rubber composition of the belt body rubber layer 3 according to the present invention, the organic peroxide may be formulated in a range of 0.5 to 5 parts by weight with respect to 100 parts by weight of a mixed polymer. The organic peroxide may be, for example, ethylene dimethacrylate, trimethylolpropane trimethacrylate, N, N'-m-phenylene dimaleimide, and triallyl cyanurate. The reason why the organic peroxide to be formulated is defined to be in a range of 0.5 to 5 parts by weight is that if it is outside this range, the belt dynamic properties, particularly strength of tooth cutting out resistance and flex fatigue resistance, are lowered and the moldability of the belt becomes significantly worse.

The following example describes illustrative methods of practicing the instant invention and are not intended to limit the scope of the invention in any way.

### EXAMPLE

A list of rubber compositions used in belt body rubber layers is shown in Table 1. It is noted that rubber compositions of formulations A-2 to A-3, A-8, and A-9 are examples of the present invention, and rubber compositions of formulations A-1, A-4 to A-7 are comparative examples. Formulation A-8 provides a rubber composition in which water resistance, weather resistance, and ozone resistance are improved and formulation A-9 provides a rubber composition in which oil resistance and the performance and cost of a rubber of formulation A-8 are balanced.

**Table 1 - Rubber Compositions**

| Rubber composition (part by weight) | | Example | | | Comparative example | | | | Example | |
|---|---|---|---|---|---|---|---|---|---|---|
| | | | | | Conventional black rubber | Conventional colored rubber | Conventional HNBR rubber | Effect of conventional ZSC | | |
| Formulation No. | | A-1* | A-2 | A-3 | A-4* | A-5* | A-6* | A-7*- | A-8 | A-9 |
| HNBR | (*1) | 35 | | 15 | | | 100 | 35 | | 15 |
| ZSC | (*2) | 65 | 20 | 20 | | | | 65 | 20 | 20 |
| ZSC | (*3) | | 30 | 30 | | | | | 30 | 30 |
| EVM | (*4) | | 50 | 35 | | | | | 50 | 35 |
| FEF carbon | | | | | | | 50 | | | |
| SRF carbon | | | | | | | | 20 | 20 | 20 |
| White carbon | (*5) | | 5 | 5 | | | | | | |
| Rutile titanium oxiade | | 10 | 10 | 10 | | | | | | |
| Calcium carbonate | (*6) | 15 | 15 | 15 | | | | | | |
| Crosslinking agent | (*7) | 9 | 9 | 9 | | | | 9 | 9 | 9 |
| Vulnoc PM | (*8) | 1 | 1 | 1 | | | | 1 | 1 | 1 |
| Anti-aging agent | (*9) | 1.5 | 1.5 | 1.5 | | | 1.5 | 1.5 | 1.5 | 1.5 |
| Stearic acid | | 1 | 1 | 1 | | | 1 | 1 | 1 | 1 |
| Plasticizer | (*10) | 4 | 4 | 4 | | | 6 | 4 | 4 | 4 |
| Sulfur | | 0.2 | 0.2 | 0.2 | | | 0.75 | 0.2 | 0.2 | 0.2 |
| Vulanizing accelerator | (*11) | | | | | | 2 | | | |
| Zinc oxide | | | | | | | 5 | | | |
| Chloroprene | (*12) | | | | 100 | 100 | | | | |
| Anti-aging agent | (*13) | | | | 2 | 2 | | | | |
| Vulcanizer | (*14) | | | | 6 | 6 | | | | |
| Vulcanizing accelerator | (*15) | | | | 0.5 | 0.5 | | | | |
| Vulcanizing retarder | (*16) | | | | 1 | 1 | | | | |
| HAF carbon | | | | | 25 | | | | | |
| SRF carbon | | | | | 30 | | | | | |
| White carbon | (*17) | | | | | 45 | | | | |
| Rutile titanium oxide | | | | | | 10 | | | | |
| Stearic acid | | | | | 1 | 1 | | | | |
| Processing aid | (*18) | | | | 3 | 3 | | | | |
| Wax | | | | | 3 | 3 | | | | |

| | | | | | | | | | | |
|---|---|---|---|---|---|---|---|---|---|---|
| * Comparative example (*1) Hydrogenated nitrile rubber, produced by Nippon Zeon Co., Ltd., Zetpol Iodine value 28 (*2) Produced by Nippon Zeon Co., Ltd. Finely distributed product (ZSC) formed by Zetpo12020 and zinc polymethacrylate (*3) Produced by Nihon Silica Co., Ltd. Finely distributed product (ZSC) formed by Zetpol2010H and zinc polymethacrylate (*4) Ethylene-vinyl acetate copolymer, produced by Bayer Co., Ltd Amount of vinyl acetate 60%, vinyl acetate copolymer in which 100°C ML1 + 4 is 55 (*5) Silica, produced by Nihon Silica Kogyo Co. Ltd. Nip sil VN3 (*6) Produced by Shiraishi Kogyo Co., Ltd. Hakuennka CC (Fatty acid treated calcium carbonate) (*7) Organic peroxide, produced by Kayaku Akzo Co., Ltd. di-tert-butyl peroxidiisopropil benzene (*8) Produced by Ohuch Shinko Chemical Co., Ltd. N,N'-m-phenylenedimaleimide (*9) Produced by Uniroyal Chem, Naugard 445 (*10) Produced by Asahi Denka Kogyo Co., Ltd., Trimellic acid ester plasticizer C - 9N (*11) Produced by Ohuch Shinko Chemical Co., Ltd., NoccelerTT (tetramethylthiuram disulfide) (*12) Produced by Showa Denko K. K., Shoprene SAD 16 (*13) Produced by Ohuch Shinko Chemical Co., Ltd., Octyl diphenyl amine (*14) Produced by Herwick Co., Ltd., Stanmag MBZ (*15) Produced by Ohuch Shinko Chemical Co., Ltd., N-N'- m-phenylenedimaleimide (*16) Produced by Ohuch Shinko Chemical Co., Ltd., Dibenzothiazyldisulfide (*17) Produced by Nihon Silica Kogyo Co., Ltd., Nip sil VNS (*18) Produced by Kawaguchi Kogyo Co., Ltd., Ecstone | | | | | | | | | | |

The performance of each rubber composition provided in Table 1 is shown in Tables 2 and 3.

**Table 2 - Non-vulcanization physical properties, 130 °C Mooney scorch**

| Formulation No. | A-1 | A-2 | A-3 | A-4 | A-5 | A-6 | A-7 | A-8 | A-9 |
|---|---|---|---|---|---|---|---|---|---|
| Vm | 45 | 25 | 36 | 48 | 62 | 54 | 40 | 32 | 41 |
| t5 (min) | 13.5 | 13.0 | 14.2 | 16.5 | 5.0 | 13.2 | 10.2 | 11.2 | 12.4 |

**Table 3 - Vulcanization physical properties, 160 °C x 30 minutes vulcanization**

| Formulation No. | A-1 | A-2 | A-3 | A-4 | A-5 | A-6 | A-7 | A-8 | A-9 |
|---|---|---|---|---|---|---|---|---|---|
| Tensile strength (MPa) | 33.4 | 24.5 | 26.5 | 18.2 | 15.7 | 21.4 | 39.6 | 26.1 | 27.8 |
| 100 % Modulus (MPa) | 9.9 | 9.7 | 10.1 | 4.4 | 2.9 | 4.1 | 16.5 | 10.2 | 10.8 |
| Elongation (%) at break or fracture | 345 | 263 | 274 | 256 | 430 | 498 | 280 | 284 | 290 |
| Hardness of rubber (Hs) | 90 | 88 | 88 | 78 | 78 | 74 | 91 | 88 | 88 |

As a comparative reference, a colored rubber of formulation No. A-5 was formed. In order to form a rubber in a color other than black, carbon black having a black color cannot be used as a reinforcing agent. Reinforcing agents other than black carbon include, for example, white carbon (silica) as used in Table 1, inorganic reinforcing agents (such as magnesium carbonate, magnesium silicate and the like), and organic reinforcing agents (such as a high-styrene resin, coumarone-indene resin, phenol-formaldehyde resin and the like). When dynamic performance and workability are taken into account, silica is usually preferred among the above agents. Accordingly, silica was selected and comparison tests were made.

Regarding both rubber formulations A-4 and A-5, the A-5 colored formulation has a higher Mooney viscosity and an earlier scorch time as compared with the A-4 carbon formulation. As such, formulation A-5 is likely to be undesirable (e.g., resulting in molding failure or the like) for usual belt productivity. Further, as demonstrated by the vulcanization physical properties, formulation A-5 has lower tensile strength than A-4 and has a low elastic modulus for hardness. This is a characteristic of a conventional colored formulated rubber, which is unsuitable for a toothed belt used at a high load. In order to enhance rigidity of a belt tooth, it is sufficient to increase the amount of white carbon (silica) for of A-5. However, the increase in white carbon results in increased adhesiveness during milling such that working or processing becomes difficult. Further, the viscosity of the compound is too great and the moldability of the product becomes significantly worse. Herein, a formulation amount of white carbon (silica) in colored carbon rubber formulations by which a toothed belt can be manufactured may be limited to 45 parts per one-hundred parts rubber (phr).

On the contrary, the formulations A-1, A-2, and A-3 (HNBR, ZSC and EVM type colored rubber formulations or compounds) have significantly high rigidity and strength. However, the A-7 formulation (ZSC, HNBR and carbon type) has significantly higher rigidity than the formulations A-1, A-2, and A-3. Regarding the workability of the rubber, the formulations of A-5 (colored rubber formulation) and formulations of single EVM exhibited significant adhesiveness during milling and at the drawing of the sheet. Accordingly, they are difficult to work with in the typical milling process and sheet drawing process. However, as in the cases of formulations A-1, A-2, and A-3, the formulation of HNBR or ZSC and specially treated calcium carbonate in EVM suppresses the adhesiveness and allows for typical use in the milling process and sheet drawing process. Calcium carbonate also contributed to the dimensional stability during non-vulcanization and vulcanization due to its effect on fillers. Furthermore in formulations A-2, A-3, A-8, and A-9, a balance between suitable viscosity and green strength was kept by combining 2295 N and 2195 H in kinds of ZSC (the differences between 2295 N and 2195 H are the molecular weight of HNBR and the degree of added hydrogen).

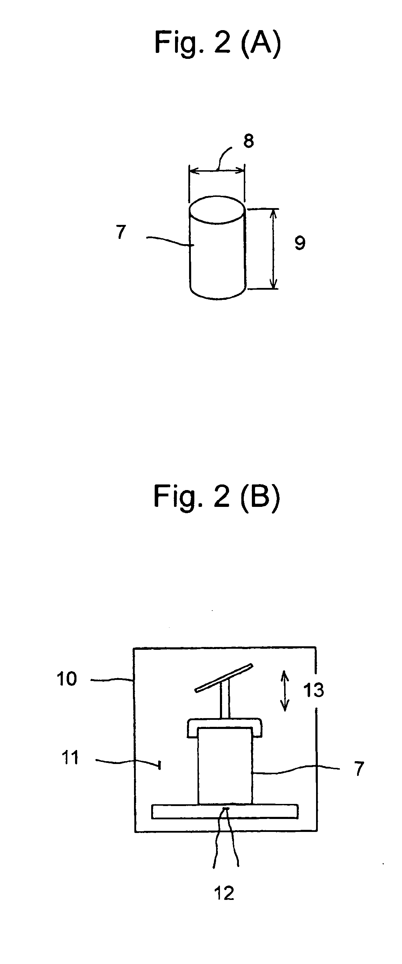

Goodrich Flexometer test results of rubber compositions in Table 1 are shown in Tables 4 and 5. The Goodrich Flexometer test was carried out as follows. A rubber composition was formed in a cylindrical shape having a diameter of a bottom surface of 19.1 mm and a height of 25.4 mm by a press and vulcanization at 160 °C for 30 minutes. The obtained cylindrical body was used as a sample. Items for Goodrich Flexometer were measured by applying a load of 50 lb and repeating compression at 1800/min with compression intervals of 0.1 inch at temperatures of 40°C and 80°C for 3 hours using the cylindrical body sample (see, e.g., Figure 2).

**Table 4 - Goodrich Flexometer Test, Atmosphere temperature 40° C, 3 hours**

| Formulation No. | A-1 | A-2 | A-3 | A-4 | A-5 | A-6 | A-7 | A-8 | A-9 |
|---|---|---|---|---|---|---|---|---|---|
| IDC (%) | 3.1 | 7.3 | 6.4 | 14.5 | 17.5 | 15.6 | 2.4 | 7.2 | 6.1 |
| ΔC(3Hr)(%) | 0 | 0 | 0 | 0.7 | 3.4 | 0 | 0 | 0 | 0 |
| HBU (%) | 21 | 20 | 20 | 24 | 29 | 23 | 23 | 22 | 22 |
| PS (%) | 2.7 | 3.1 | 2.8 | 3.4 | 8.2 | 2.1 | 2.6 | 2.8 | 2.7 |

**Table 5 - Goodrich Flexometer Test, Atmosphere temperature 80° C, 3 hours**

| Formulation No. | A-1 | A-2 | A-3 | A-4 | A-5 | A-6 | A-7 | A-8 | A-9 |
|---|---|---|---|---|---|---|---|---|---|
| IDC (%) | 4.0 | 8.1 | 7.2 | 15.9 | 20.4 | 16 | 3.1 | 7.9 | 6.9 |
| ΔC(3Hr)(%) | 0 | 0 | 0 | 2.3 | 5.2 | 1.1 | 0 | 0 | 0 |
| HBU ( ) | 13 | 13 | 12 | 19 | 23 | 16 | 14 | 15 | 15 |
| PS (%) | 4.3 | 4.3 | 4.1 | 9.1 | 18.5 | 6.4 | 4.1 | 4.1 | 4.0 |

In the Goodrich Flexometer tests, IDC is a distortion degree (%) of a sample in the first stage of the test while applying a test load during dynamic operation (repeated compression). For example, if IDC is 10% the sample is distorted by 2.54 mm (i.e., 25.4 × 0.1). Formulations A-1, A-2, and A-3 each have a significantly higher elastic modulus as compared with A-6 (conventional HNBR formulation) even on the compression side and maintain substantially the same high elastic modulus as in the cases of A-7, A-8, and A-9 (carbon formulations).

ΔC is the difference between distortion degree after 3 hours and initial distortion degree (IDC). However, the larger ΔC is, the lower the fatigue resistance to repeated fatigue is. The value of ΔC typically increases with temperature. When these values are compared with each other at atmospheric temperatures of 40°C and 80°C, it is clear that formulations A-4 and A-5 (CR formulations) have larger thermal influences than HNBR types and other formulations have no thermal influence at about 80°C.

Colored formulation A-5 (CR colored formulation or compound) showed a decrease in strength and elastic modulus and a larger decrease in repeated fatigue as compared with black formulation A-4 (carbon formulation or compound). On the other hand, A-1, A-2, and A-3 (EVM, HNBR, ZSC type colored formulations) have no difference in the properties from their carbon formulations or compounds (A-7, A-8, A-9). Thus, coloring formulation has only a small fatigue resistance and temperature dependency due to a temperature rise derived from self heat generation and due to a difference between atmospheric temperatures.

HBU represents an increased temperature of a sample due to self heat generation caused when the sample received repeated fatigue. A higher HBU indicates the greater generation of self heat. The HBU is usually influenced by the molecular weight of a polymer in a rubber formulation or compound, the crosslinking density, the crosslinking form, and the quality and amount of a reinforcing agent, among other factors. Additionally, it is considered that the lower a HBU value is, the more dynamically stabilized the physical properties can be maintained. Notably, the HBUs of A-1, A-2, A-3 (EVM, HNBR, and ZSC type colored formulations) are lower than those of A-6, A-7, A-8 , A-9 (HNBR carbon formulations).

PS represents permanent distortion and is a value which is significantly influenced by kinds of polymers, molecular weight, crosslinking density, crosslinking process, and the like. When a belt is operated through a fixed idler or the like, the back rubber is naturally in a state where it is pressed and distorted by load tension due to the idler. However, a large PS decreases the thickness of the back rubber portion and gradually increases a gap between the back rubber portion and the idler. Therefore, a decrease of a set tension for an increased PS is generated and a predetermined transmission cannot be performed. Thus, PS values are important for belt performance.

Furthermore, with regard to the tooth portion, PS is a very important factor in belt performance in engagement failure due to permanent deformation due to repeated shearing force and generation of rubber cracks due to repeated fatigue. The PS values of the colored formulations or compounds of A-1 to A-3 were half or less those of A-4 and A-5 (CR formulations) and were the same as those of A-6 to A-9 (carbon formulations).

As described above, when the values of A-1, A-2, and A-3 are compared with a value of A-5 (conventional colored formulation or compound) for dynamic physical properties of a rubber, the perceived decrease in dynamic physical properties due to coloring formulation (aseen with A-5) could be improved by forming a HNBR-ZSC-EVM type- and ZSC-EVM type colored formulations. Accordingly, improved dynamic physical properties can be obtained.

Results of ozone resistance tests (dynamic ozone tests) are shown in Table 6.

**Table 6 - Ozone resistance test (dynamic ozone test)**

| Formulation No. | Time | 24 Hours | 96 Hours | 168 Hours | 216 Hours | 346 Hours |
|---|---|---|---|---|---|---|
| A-1 | | NC | NC | NC | A-1 | A-2 |
| A-2 | o | NC | NC | NC | NC | NC |
| A-3 | o | NC | NC | NC | NC | NC |
| A-4 | | NC | NC | NC | NC | NC |
| A-5 | | NC | NC | NC | NC | NC |
| A-6 | | NC | NC | NC | NC | NC |
| A-7 | | NC | NC | NC | A-1 | A-2 |
| A-8 | o | NC | NC | NC | NC | NC |
| A-9 | o | NC | NC | NC | NC | NC |

| | | | | | | |
|---|---|---|---|---|---|---|
| o Effect of EVM formulation Conditions: Sample 160°C × 30 minutes vulcanization, ozone concentration: 50 pphm, atmospheric temperature 40°C, elongation or extension 0 to 10 % | | | | | | |

According to the results of ozone resistance tests (dynamic ozone tests), a formulation of HNBR of an iodine value of 28 and ZSC (2295 N) of the same polymer standard (formulation A-1), a micro crack was recognized after about 216 hours. However, in EVM formulations or compounds (A-2 and A-3), a micro crack was not recognized after 346 hours. In EVM formulations (A-2, A-3, A-8, A-9), a large reason for the lack of cracking is the superior ozone resistance of EVM.

The results of water resistance swelling tests are shown in Tables 7 and 8. The water resistance swelling tests were performed as follows. A rubber composition was vulcanized at 160°C for 30 minutes to form a 2 mm thick rubber sheet. Then the sheet was cut in a shape of 20 mm × 40 mm to form a sample. The sample was then immersed into a constant temperature bath containing 60°C hot water and changes in the volume and in hardness were measured.

**Table 7 - Water resistance swelling test (comparison of changes of volume and hardness after immersion into hot water at 60°C)**

| Formulation No. | Time | 48 Hours | 312 Hours | 504 Hours | 912 Hours |
|---|---|---|---|---|---|
| A-1 | | 0.6 | 0.8 | 0.9 | 1.2 |
| A-2 | o | 0.4 | 0.6 | 0.6 | 0.6 |
| A-3 | o | 0.3 | 0.5 | 0.6 | 0.7 |
| A-4 | | 6.0 | 20.4 | 27.9 | 31.4 |
| A-5 | | 12.6 | 26.7 | 32.1 | 39.6 |
| A-6 | | 0.4 | -0.6 | -0.7 | -1.0 |
| A-7 | | 0.5 | 0.7 | 0.9 | 1.1 |
| A-8 | o | 0.3 | 0.4 | 0.5 | 0.6 |
| A-9 | o | 0.2 | 0.4 | 0.6 | 0.7 |

| | | | | | |
|---|---|---|---|---|---|
| Rate of volume change (%) (increased or decreased) o Effect of EVM formulation | | | | | |

**Table 8 - Change of hardness (Hs)**

| Formulation No. | Time | 48 Hour | 312 Hour | 504 Hour | 912 Hour |
|---|---|---|---|---|---|
| A-1 | | -1 | -1 | -1.5 | -2 |
| A-2 | | -0.5 | -0.5 | -0.5 | -1 |
| A-3 | | -0.5 | -0.5 | -0.5 | -1 |
| A-4 | | -3 | -6 | -8 | -9 |
| A-5 | | -5 | -9 | -11 | -13 |
| A-6 | | -0.5 | 0 | 0 | +1 |
| A-7 | | -1 | -1 | -1.5 | -2 |
| A-8 | | -0.5 | -0.5 | -0.5 | -0.5 |
| A-9 | | -0.5 | -0.5 | -0.5 | -1.0 |

Both samples A-4 and A-5 formulations exhibit large swell characteristics. In particular, a colored formulation in which a large amount of hydrophilic silica of A-5 is formulated was swelled to such a degree that the original state is hardly detectable. Notably, if hydrophobic silica is used, a slight enhancement can be obtained. However, the conventional rubber formulations are carbon blends or formulations an yield poor values, particularly in view of cost, workability, dynamic physical properties and the like, and therefore their use is as a rubber for a colored toothed belt is not preferred.

On the other hand, the A-6 (HNBR carbon compounding or formulation), A-1, A-7 (HNBR-ZSC type), A-3, A-9 (HNBR-ZSC-EVM type), A-2, and A-8 (ZSC-EVM type) formulations exhibited hardly any swelling. Notably, the change of volume of A-1 and A-7 (HNBR-ZSC type) was slightly larger. However, this test is an acceleration test in hot water and when the track record of a CR belt (carbon formulation) on the market (e.g., for a bicycle) is taken into consideration, the water resistance of A-1 and A-7 seems to be sufficient for use outdoors in rainy conditions.

Further, the HNBR carbon formulation or compound of A-6 actually shrunk. This is considered to be due to the fact that the crosslink type is a sulfur crosslink and treatment in 60°C hot water increases crosslinking density (thermal hardening) whereby hydrophilic formulations or compounds (plasticizer and the like) distributed in the liquid state in formulations were extracted in the hot water. Although thermal hardening of the CR formulations or compounds of A-4 and A-5 is earlier than HNBR type, it is considered that swell characteristics to water is superior to shrinkage due to thermal hardening. Thus, it is clear that HNBR type rubber is superior to CR type rubber with respect to water.

Further, it can be said that formulations or compounds comprising EVM such as A-3, A-8 (HNBR- ZSC-EVM type) and A-2, A-7 (ZSC-EVM type) maintain the most stable physical properties to water irrespective of coloring formulation among formulations A-1 to A-9. Accordingly, these formulations can be used as rubber for a toothed belt at areas where a large amount of water splashes and high humidity areas as well as at high temperatures.

Results of oil resistance swelling tests are shown in Tables 9 and 10. The oil resistance swelling tests were performed as follows. A rubber composition was vulcanized at 160°C for 30 minutes to form a 2 mm thick rubber sheet. Then the sheet was cut to 20 mm x 40 mm to form samples. Then the samples were immersed into hot oil of JIS No. 3 oil at 60°C and changes in volume and hardness of the samples were measured.

**Table 9 - Oil resistance swelling test (comparison of changes of volume and hardness after immersion into JIS NO. 3 oil at 60°C)**

| Formulation No. | Time | 48 Hours | 312 Hours | 504 Hours | 912 Hours |
|---|---|---|---|---|---|
| A-1 | | 2.5 | 4.3 | 5.3 | 7.8 |
| A-2 | | 9.7 | 14.3 | 15.4 | 17.5 |
| A-3 | | 3.2 | 5.4 | 7.6 | 10.2 |
| A-4 | | 21.1 | 39.4 | 39.8 | 40.7 |
| A-5 | | 25.7 | 43.5 | 45.1 | 48.6 |
| A-6 | | 1.3 | 1.4 | 2.4 | 2.8 |
| A-7 | | 2.1 | 3.4 | 4.9 | 6.4 |
| A-8 | | 8.8 | 12.7 | 14.5 | 16.1 |
| A-9 | | 2.9 | 4.8 | 6.6 | 8.7 |

| | | | | | |
|---|---|---|---|---|---|
| Rate of volume change (%) (increased or decreased) | | | | | |

**Table 10 - Change of hardness (Hs) Point**

| Formulation No. | Time | 48 Hours | 312 Hours | 504 Hours | 912 Hours |
|---|---|---|---|---|---|
| A-1 | | -1 | -1.5 | -2 | -2.5 |
| A-2 | | -4 | -5 | -6 | -7 |
| A-3 | | -2 | -3 | -3 | -4 |
| A-4 | | -14 | -16 | -17 | -20 |
| A-5 | | -15 | -18 | -21 | -24 |
| A-6 | | -1 | -1 | -1.5 | -1.5 |
| A-7 | | -1 | -1.5 | -2 | -2 |
| A-8 | | -3 | -4 | -6 | -7 |
| A-9 | | -2 | -3 | -3 | -3.5 |

According to the results of the oil resistance swelling tests, CR formulations or compounds (A-4, A-5) exhibit larger swell as compared with other formulations and have significant difference between carbon black formulation or compounding and coloring formulation or compounding. On the other hand, HNBR-ZSC type (A-1 and A-7), HNBR-ZSC-EVM type (A-3 and A-9), and ZSC-EVM type (A-2 and A-8) have small difference between carbon black formulation or compounding and coloring formulation or compounding. The swelling difference between carbon formulations or compounds and coloring formulations or compounds in the CR formulations is the difference of reinforcing effect of carbon on the polymer. This may be the result of the molecular chains being physically and chemically coupled with each other with a greater force such that the compound became resistant to oil swelling. Other formulations or compounds other than A-4, A-5, and A-6 can obtain a reinforcing effect by employing zinc methacrylate instead of carbon black and thereby also allowing for coloring. The reason why the formulation or compounding of A-6 has the lowest swelling is likely because the formulation ratio of HNBR polymer is the highest and the compatibility with oil is the smallest.

The results of other formulations or compounds (except for CR formulations) related to the HNBR formulation ratios. Furthermore, the small difference between the results obtained for A-1 and A-7, A-2 and A-8, and A-3 and A-9 are the result of a reinforcing effect of zinc methacrylate and a small added reinforcing effect of carbon black. These test results show that rubbers of the instant invention (e.g., A-1, A-3, A-9) can be used at substantially the same level as conventional oil resistance rubbers (A-6, A-7) having actual results by slightly compounding or formulating HNBR (A-3, A-9) in spite of coloring and/or EVM compounding.

Results of weather resistance tests are shown in Tables 11 and 12. The rubber compositions of A-1 to A-9 were vulcanized at 160°C for 30 minutes by a press and then the vulcanized rubber compositions were punched by a mold of dumbbell NO. 3. Then the obtained structures were used as samples and the changes in tensile strength and changes in elongation at fracture or break were measured while using a cycle of irradiation for 60 minutes at a black panel temperature of 63°C and humidity of 50% in the machine and water splashing for 12 minutes.

**Table 11 - Weather resistance test**

| | Irradiation time | 0 Hour | 24 Hours | 96 Hours | 200 Hours |
|---|---|---|---|---|---|
| Formulation No. | | | | | |
| A-1 | | 0 | -10 | -12 | -13 |
| A-2 | | 0 | 0 | -2 | -5 |
| A-3 | | 0 | -2 | -5 | -9 |
| A-4 | | 0 | 0 | -3 | -5 |

| | | | | | |
|---|---|---|---|---|---|
| - Composite weather-O meter (B bath: Sunshine arc lamp) - Black panel temperature: 63±3°C; Humidity in machine: 50 ± 5% RH; Spray cycle: 60 minutes - 12 minutes (water splashing) | | | | | |

**Table 12 - Weather resistance test**

| Irradiation time | 0 Hour | 24 Hours | 96 Hours | 200 Hours |
|---|---|---|---|---|
| Formulation No. | | | | |
| A-1 | 0 | -15 | -18 | -23 |
| A-2 | 0 | 0 | -5 | -10 |
| A-3 | 0 | -7 | -10 | -15 |
| A-4 | 0 | -7 | -7 | -11 |

| | | | | |
|---|---|---|---|---|
| - Fracture elongation reduction rate (%) | | | | |

The sample A-4 (CR carbon formulation or compounding type) had small reduction rates in tensile strength and elongation at fracture and the results were the same results as in ozone resistance test. However, A-2 (ZSC-EVM type colored formulation or compound) exhibited the same level resistance as that of A-4 (CR carbon formulation or compound). Although the result for A-4 (CR carbon formulation type) was expected to be slightly poor due to the influence of water (see results from the water resistance tests), it was considered that wax blooms during vulcanization of the rubber provided protection. On the contrary in spite of the fact that wax or the like is not formulated or blended in the sample A-2 (ZSC-EVM type colored formulation or compound), the sample A-2 exhibited the same weather resistance as that of a CR type (effect of EVM). Thus, it is expected that A-2 can maintain excellent physical properties even in a case it is used dynamically outdoors or the like.

Results of taper wear tests are shown in Table 13. Rubber compositions of A-1 to A-9 were vulcanized at 160°C for 30 minutes by a press to form 2 mm thick sheets. Then the sheets were punched in a circular shape of a diameter of 10.7 mm. Evaluation tests of wear properties were performed by setting the samples on a taper wear tester using a load of 1 kg, a rotating speed of 70 r/m and wear wheel H-10, and holding it at a temperature of a sample surface of 80°C at the initial stage of a test with a heated air generator.

**Table 13 - Taper wear test**

| Number of times of wear | 5000 times | 10000 times | 20000 times | 30000 times |
|---|---|---|---|---|
| Formulation No. | | | | |
| A-1 | -0.029 | -0.039 | -0.044 | -0.051 |
| A-2 | -0.048 | -0.055 | -0.068 | -0.075 |
| A-3 | -0.033 | -0.042 | -0.047 | -0.055 |
| A-4 | 0.087 | *Adhesive wear | | |
| A-5 | *Adhesive wear | | | |
| A-6 | -0.077 | -0.087 | -0.092 | -0.102 |
| A-7 | -0.025 | -0.035 | -0.040 | -0.049 |
| A-8 | -0.041 | -0.051 | -0.063 | -0.071 |
| A-9 | -0.030 | -0.042 | -0.046 | -0.053 |

| | | | | |
|---|---|---|---|---|
| - Wear wheel H -10; Load: 1 kg; Rotation speed: 70 r/m; Sample temperature: 80°C | | | | |

Adhesive wear was caused at 1000 times for sample A-6 (CR carbon formulation or compounding type) and 500 times for sample A-5 (CR coloring formulation type) and the test was stopped. It is noted that the adhesive wear exhibits a state where a wear area of the sample has such low viscosity conditions as in rubber cement and adheres to a wear wheel so that the wear test cannot be continued. Thus, the adhesive wear exhibits a state where rubber molecules are cut by temperature rise due to an atmospheric temperature and friction of the wear wheel and by sheering force received from the wear wheel so the molecular weight is reduced.

In contrast to samples A-4 and A-5, samples A-1 to A-3 and A-6 to A-9 (HNBR, HNBR-ZSC, HNBR-ZSC-EVM, and ZSC-EVM type formulations or compounds) did not generate adhesive wear and exhibited excellent wear resistance. Among samples A-1, A-2, A-3, A-7, A-8, and A-9, ZSC formulations or compounds have no differences between carbon and coloring and also have no differences between presence and absence of mixing of EVM. Thus, they have very excellent wear resistance as compared with sample A-6 (conventional HNBR carbon formulation or compounding type).

Results of temperature dependency tests are shown in Table 14. Rubber compositions of A-1 to A-9 were vulcanized at 160°C for 30 minutes by a press to form 2 mm thick sheets. Then the sheets were punched in a circular shape with a mold of a dumbbell No. 3. Then the respective hardness of three joined sheets were read and a difference between the obtained values was checked. The samples were left in respective atmospheric temperatures for 20 minutes and the difference between hardness at the time and hardness in a room temperature was checked, so that various temperature dependencies were compared with each other in a simple manner.

**Table 14 - Temperature dependency test**

| Temperature | 100 | 110 | 120 | 130 | 140 |
|---|---|---|---|---|---|
| Formulation No. | | | | | |
| A-1 | 0 | 0 | -0.5 | -0.5 | -0.5 |
| A-2 | 0 | 0 | -0.5 | -0.5 | -0.5 |
| A-3 | 0 | 0 | -0.5 | -0.5 | -0.5 |
| A-4 | -2 | -3 | -3.5 | -4 | -4.5 |
| A-5 | -3 | -4 | -5.5 | -6 | -6.5 |
| A-6 | -1 | -1.5 | -2 | -2 | -2.5 |
| A-7 | 0 | 0 | -0.5 | -0.5 | -0.5 |
| A-8 | 0 | 0 | -0.5 | -0.5 | -0.5 |
| A-9 | 0 | 0 | -0.5 | -0.5 | -0.5 |

| | | | | | |
|---|---|---|---|---|---|
| - Gear oven; Change in hardness (Hs) after holding for 20 minutes | | | | | |

In samples A-4 and A-5 (CR formulations or compounds) a significant reduction of hardness was found, particularly at high temperatures. The reduction of hardness in sample A-5 (CR formulation or compound) was remarkably large. Furthermore, even in HNBR, the A-6 formulation or compound whose crosslinking process is a sulfur crosslinking, had a significant reduction of hardness. However, in the formulations or compounds of A-1 to A-3 and A-7 to A-9, there was hardly any reduction of hardness, even in an atmosphere of 140°C. This is likely due to the fact that the crosslinking process of these compounds is a peroxide crosslinking, which is significantly different from the compounds A-4 and A-5 and has tight crosslinking conditions.

Therefore, when the colored rubbers A-1 to A-3 and the carbon formulations or compounds A-7 to A-9 are used as rubber for a toothed belt, they exhibit little softening due to a temperature rise caused by an atmospheric temperature rise, self heat generation due to flex, and/or frictional heat. Accordingly, these formulations retain their physical properties.

Toothed belts using the rubber compositions of formulation Nos. A-1 to A-9 as belt body rubber layers, were prepared as trial products shown in Table 15. The test results of tooth jumping torque, load endurance, and water injection load endurance are shown in Tables 16 to 19.

Toothed belts produced as trial products are as follows:
1) Rubber compositions of belt body rubber layers; formulation No. A-1 to A-9.
2) Core strand, E glass Construction 3/13 - 2.0 RFL treatment code, Rubber other than the rubber of A-4 and A-5 has an over coat layer (adhesive layer), Core strand winding pitch 1.40 mm.
3) Tooth cloth; Raw fabric - Nylon 66 Longitudinal yarn 235/1 dtex, Latitudinal yarn 235 dtex/2, 2/2 twill weave, adhesion treatment- Formulation Nos. A-4 and A-5 are CR type rubber paste treatment. Formulation Nos. A-1 to A-3 and A-6 to A-9 are HNBR type rubber paste treatment. It is noted that toothed belts using A-4 and A-6 rubber are representative of a typical toothed belt at present.

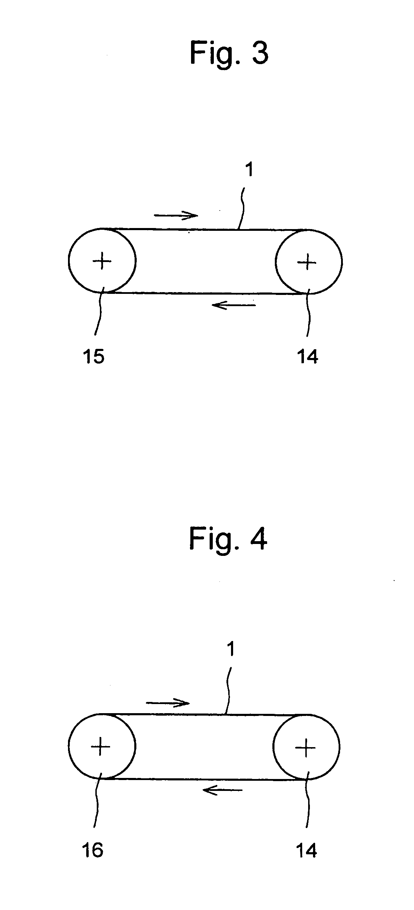

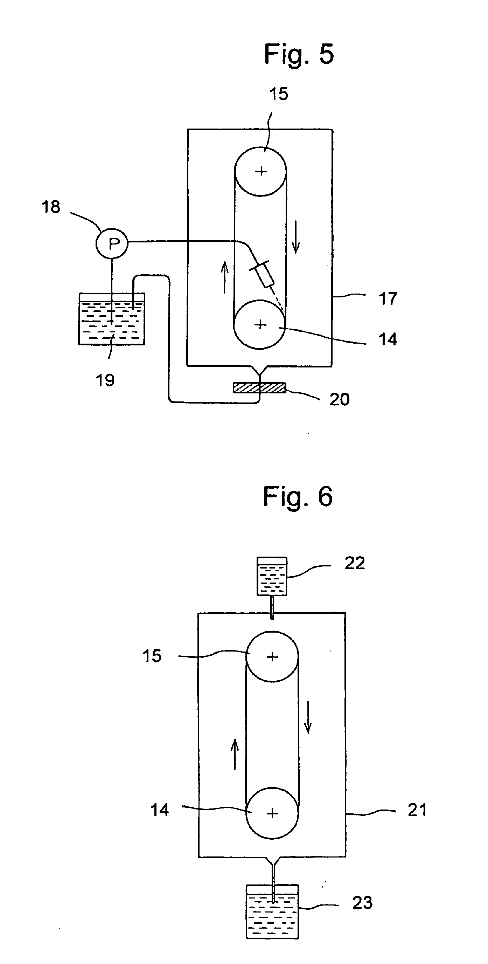

The toothed belts prepared as trial products have a tooth pitch of 8 mm, 125 teeth, and a belt width of 25 mm. The running tests were performed test with the toothed belts trained around a driving pulley with 30 teeth and a driven pulley with 30 teeth. A tooth jumping torque test was performed by a layout as shown in Figure 3, a load endurance test was performed by a layout as shown in Figure 4, a water injection load endurance test was performed by a as layout shown in Figure 5, and an oil injection load endurance test was performed by a layout as shown in Figure 6.

**Table 15 - Toothed Belts**

| Toothed belt | H1 | H2 | H3 | H4 | H5 | H6 | H7 | H8 | H9 |
|---|---|---|---|---|---|---|---|---|---|
| Rubber | A-1 | A-2 | A-3 | A-4 | A-5 | A-6 | A-7 | A-8 | A-9 |
| Tooth cloth | F1 | F1 | F1 | F2 | F2 | F1 | F1 | F1 | F1 |
| Core strand | E1 | E1 | E1 | E2 | E2 | E1 | E1 | E1 | E1 |

| | | | | | | | | | |
|---|---|---|---|---|---|---|---|---|---|
| - E1: Core strand with an over coat layer; E2: Core strand without an over coat layer; F1: HNBR type rubber paste-treated cloth; F2: CR type rubber paste-treated cloth | | | | | | | | | |

**Table 16 - Tooth jumping torque**

| Toothed belt | Formulation No. | Tooth jumping torque (Nm) | Ratio |
|---|---|---|---|
| H1 | A-1 | 102 | 146 |
| H2 | A-2 | 101 | 144 |
| H3 | A-3 | 102 | 146 |
| H4 | A-4 | 70 | 100 |
| H5 | A-5 | 51 | 73 |
| H6 | A-6 | 70 | 100 |
| H7 | A-7 | 113 | 161 |
| H8 | A-8 | 104 | 149 |
| H9 | A-9 | 105 | 150 |

| | | | |
|---|---|---|---|
| - Number of pulley teeth: 30T - 30T; Rotational speed: 3000 r/m; Room temperature (26°C) | | | |

The tooth jumping torque test was performed as follows. A toothed belt was operated at a mounting tension of 382 N and a constant rotational speed of 3000 r/m, then a load torque is gradually increased and the torque in an instant when a belt was tooth-jumped, is read and the average value (number of times of 3) of the torque was defined as a tooth jumping torque. The ratio in Table 16 is compared to the standard obtained when the tooth jumping torque of the C carbon formulation or compounding type (rubber composition of formulation No. A-4) is defined as 100. Since the construction of the core strands, which are a tension resistance body, is the same among all of the belts, the differences in the results of the tooth jumping tests are due to the rigidity of the rubber composition. The rubber compositions (examples) of formulation Nos. A-1 to A-3 were from 1.4 times to 1.6 times the values of tooth jumping torques. Belts comprising A-4 and A-5 CR formulation or compounding type are about 30% down as compared with the carbon formulation or compounding type. In contrast, HNBR-ZSC, HNBR-ZSC-EVM, and ZSC-EVM types, even in coloring formulation or compounding and even if EVM is formulated or compounded, a sufficient tooth jumping torque can be exhibited.

**Table 17 - Load endurance test**

| Toothed belt | Formulation No. | Downtime (Hr) | Failure form | Ratio |
|---|---|---|---|---|
| H1 | A-1 | 1100 | Tooth cutting out | 204 |
| H2 | A-2 | 1032 | **↑** | 191 |
| H3 | A-3 | 1055 | **↑** | 195 |
| H4 | A-4 | 540 | **↑** | 100 |
| H5 | A-5 | 85 | **↑** | 16 |
| H6 | A-6 | 683 | **↑** | 126 |
| H7 | A-7 | 1157 | **↑** | 214 |
| H8 | A-8 | 1085 | **↑** | 201 |
| H9 | A-9 | 1041 | **↑** | 193 |

| | | | | |
|---|---|---|---|---|
| - Number of pulley teeth: 30 T - 30 T; Mounting tension: 382 N; Load torque: 41 N.m; Rotational speed: 3000 r/m; Room temperature (23°C to 26°C) | | | | |

In the load endurance test (see Figure 4), failure forms were all tooth cutting out. The life difference between CR formulation or compounding of A-4 and A-5, and CR coloring formulation case had only about 16% in the coloring formulation case as compared with the carbon formulation case. Significant engagement failures seem to be generated by insufficient rigidity of rubber, large temperature dependency, and poor dynamic properties of A-5.

With regard to samples A-4 (CR carbon formulation or compounding) and A-6 (HNBR carbon formulation or compounding), A-6 exhibited endurance about 1.3 times greater than A-4. Thus, it appears that HNBR type treatment is superior to CR type treatment.

The HNBR-ZSC type, NHBR-ZSC-EVM type, and ZSC-EVM type for formulation rubbers of A-1 to A-3 and A-7 to A-9 exhibited high endurance irrespective of the carbon formulation or compounding and coloring formulation or compounding. Indeed, suitable engagement during belt operation can be maintained for a long period of time since they exhibit excellent rigidity, dynamic properties, and temperature dependency. Furthermore, an RFL latex, which functions to protect core strands and provide an adhesion mechanism for appropriate crosslinking by an organic peroxide of the body rubber, a core strand RFL film itself increases strength and elongation of the core strand, which leads to higher endurance by a synergetic effect between the increased strength and the above-mentioned physical properties.

**Table 18 - Water injection load endurance test**

| Formulation No. | Downtime (Hr) | Failure form | Reduction of rubber hardness at failure |
|---|---|---|---|
| A-1 | 500 | Fracture or break | -2.5 |
| A-2 | 615 | **↑** | -2 |
| A-3 | 599 | **↑** | -2 |
| A-4 | 246 | **↑** | -7 |
| A-5 | 124 | **↑** | -8 |
| A-6 | 311 | **↑** | -1.5 |
| A-7 | 510 | **↑** | -2.5 |
| A-8 | 640 | **↑** | -2 |
| A-9 | 604 | **↑** | -2 |

| | | | |
|---|---|---|---|
| - Number of pulley teeth: 30 T - 30 T; Temperature in water injection bath (44 to 55°C, Mounting tension: 382 N); Load torque: 20.5 N m; Rotational speed: 3000 r/m; Amount of injected water: 1L/min. | | | |

In the water injection load endurance tests (see Figure 5), the CR type belts of A-4 and A-5 had significantly large reduction in rubber hardness, as in the static swelling test. Particularly, the hardness of sample A-4 (carbon formulation or compounding) was reduced by 7 after 246 hours (failure time) and the hardness of sample A-5 (coloring formulation or compounding) was reduced by 8 after just 124 hours (failure time). In a static hot water swelling test at 60°C, the hardness of sample A-4 (carbon formulation) was reduced by 6 after 312 hours (failure time) and the hardness of sample A-5 (coloring formulation) was reduced by 7. Thus, it is clear that in a dynamic water resistance test, swelling is accelerated.

In contrast, sample A-6 (HNBR carbon formulation or compounding) had no reduction in rubber hardness in a static swelling test and was rather hardened. However, in a dynamic test, the hardness decreased by 1.5 (- 1.5 point) and slight swelling could be seen. Therefore, swelling is more severe in the dynamic test than the static test, as in the CR type case. The formulation types of A-1 to A-3 and A-7 to A-9 exhibited a life of about 2.4 times that of A-4 (CR carbon formulation) and two times that of A-6 (HNBR carbon formulation). Notably, their swelling characteristics were substantially the same as that of A-6 (HNBR carbon formulation), when taking the change in hardness into consideration. However, samples A-1 to A-3 and A-7 to A-9 have high initial rubber rigidity and, even if their rubber rigidity is reduced by slight swelling, sufficient rigidity and strength are maintained in this test to keep appropriate engagement for a longer duration than sample A-6. Another large reason why the samples had long lives may be that if the swelling of rubber due to water is the same as the swelling of a core strand due to water, then the deterioration of the core strand due to the influence of water is the same as that of the rubber due to water.

Although the difference between rigidities of rubbers in the formulated or compounded belt A-6 and the formulated or compounded belts A-1 to A-3 and A-7 to A-9 may not totally account for the difference in endurance observed, these formulations or compounds (examples) exhibited endurance which is about two times the endurance of the formulation or compound A-6. One reason for the large improvement in endurance is that the crosslinking process of the formulated rubbers of A-1 to A-3 and A-7 to A-9 is a peroxide crosslinking. The latex RFL of a core strand functions as a protector of the core strand and is tightly crosslinked by the peroxide in the rubber formulation or compound. The water resistance swelling characteristics of the RFL reinforced core strand is improved compared with CR type crosslinking for the samples A-4 and A-5 and HNBR sulfur crosslinking type for the sample A-6. Additionally, the retention of belt tension is more stable with the formulated rubbers of A-1 to A-3 and A-7 to A-9 as compared with the samples A-4, A-5, and A-6 due to the above-mentioned improvement of water resistance and swelling characteristics.

Further, samples A-2 and A-8, which have a high EVM formulation or compounding ratio, exhibited high endurance. In spite of the fact that formulation numbers A-1 to A-3 (examples) are colorable, they have higher endurance than formulation No. A-6, which has carbon black and HNBR formulation or compounding, and has the same water resistance endurance as formulation Nos. A-7 and A-8, which have carbon black formulation or compounding. Additionally, they are superior to the toothed belts of the formulation Nos. A-4 to A-6.

**Table 19 - Oil injection load endurance test**

| Formulation No. | Downtime (Hr) | Failure form | Reduction of rubber hardness at failure |
|---|---|---|---|
| A-1 | 1356 | Tooth cutting out | -6 |
| A-2 | 989 | **↑** | -10 |
| A-3 | 1299 | **↑** | -7 |
| A-4 | 103 | **↑** | -8 |
| A-5 | 16 | **↑** | -6 |
| A-6 | 801 | **↑** | -5 |
| A-7 | 1395 | **↑** | -6 |
| A-8 | 1005 | **↑** | -9.5 |
| A-9 | 1310 | **↑** | -7 |

| | | | |
|---|---|---|---|
| - Number of pulley teeth: 30 T - 30 T; JIS No. 3 oil; Temperature in oil injection bath (44 to 55°C, mounting tension: 382 N); Load torque: 41 N·m; Rotational speed: 3000 r/m; Amount of injected oil: 500 mL/day | | | |

The oil injection load endurance test (see Figure 6) was performed as follows. A belt was operated within a tightly closed test bath in such a manner that test oil is applied at times until travel of the belts using the respective formulated or compounded rubbers becomes impossible. In the oil injection load endurance test, failure forms of the belts were all due to tooth cutting out. In the case of the samples A-4 and A-5 (CR type formulations or compounds), the A-4 (carbon formulation compounding) generated tooth cutting out after 103 hours, and the A-5 (coloring formulation or compounding) generated tooth cutting out after just 16 hours. In the light of usual load endurance test results (load is the same) both of the samples reduced in the endurance time to about 20%.

In contrast, the carbon formulation and coloring formulation of samples A-6 (HNBR carbon formulation or compounding), A-1 and A-7 (HNBR-ZSC type) and A-3 and A-9 (HNBR-ZSC-EVM type) had extended lives compared to the typical belt in the load endurance tests. Furthermore, both of the samples A-2 and A-8 (ZSC-EVM type) had slightly shorter life in the oil resistance test. The reasons for this slightly short life of these samples was likely due to a reduction in rubber rigidity generated by swelling due to test oil, engagement failure generated by dimensional changes of the tooth portion and tooth bottom portion, and a reduction in adhesive forces in the respective adhesive layers, taking the reduction in hardness into consideration.

Reasons why samples A-6, A-3, A-7 and A-9 each had a longer life in the load endurance test are that they exhibit little swelling in a dynamic oil swelling test, they exhibit only a small reduction in the performance of the body rubber, adhesive strength, dimensional change and the like, and the tooth cloth treatment is a HNBR type rubber paste treatment which causes a reduction in friction coefficient of test oil to a pulley or the like.

Thus, it could be said that the swelling due to oil on rubber may be an important factor in determining the life of a belt, as samples A-2 and A-8 (ZSC-EVM type) had a little shorter life as compared with samples A-1, A-3, A-7 and A-9, which are HNBR high formulation or compounding type. However, samples A-2 and A-8 have a larger swelling of rubber than sample A-6 (HNBR carbon formulation or compounding) from the result of a static oil resistance swelling test, but they have a longer traveling life than the belt of A-6. This may be due to the fact that the influence (retention of tension) of an organic peroxide crosslinking rubber on a core strand RFL and the difference of initial physical properties of rubbers are sufficient to increase belt life.

In accordance with the instant invention, calcium carbonate, silica, and titanium oxide may be formulated or compounded in a rubber composition of the belt body rubber layer. Thus, the comparison between dimensional stabilities of non-vulcanized rubber and vulcanized rubber were made in coloring type formulations or compounds. The coloring formulations or compounds are shown in Table 20.

**Table 20 - Color formulations**

| | | Example | Comparative example | Comparative example |
|---|---|---|---|---|
| | | A-2 | B-1 | B-2 |
| Zeoforte 2295 N | (1) | 20 | 20 | 20 |
| Zeoforte 2195 H | (2) | 30 | 30 | 30 |
| VPKA 8815 | (3) | 50 | 50 | 50 |
| White carbon | (4) | 5 | 5 | 5 |
| Lutile titanium oxide | | 10 | 10 | 10 |
| Perkadox 14 - 40C | (5) | 9 | 9 | 9 |
| Vulnoc PM | (6) | 1 | 1 | 1 |
| Anti-aging | (7) | 1.5 | 1.5 | 1.5 |
| Stearic acid | | 4 | 4 | 4 |
| Plasticizer | (8) | 4 | 4 | 4 |
| Sulfur | | 0.2 | 0.2 | 0.2 |
| Surface-treated calcium carbonate | (9) | 15 | | |
| Soft calcium carbonate | (10) | | | 15 |

| | | | | |
|---|---|---|---|---|
| (1) Produced by Nippon Zeon Co., Ltd.; Finely distributed product formed by Base polymer Zetpo12020 and zinc polymethacrylate (2) Produced by Nippon Zeon Co., Ltd.; Finely distributed product formed by Base polymer Zetpo12010H and zinc polymethacrylate (3) Produced by Beier Co., Ltd; Amount of vinyl acetate 60% Ethylene-vinyl acetate copolymer (EVM) in which 100°C at ML1 + 4 is 55 (4) Produced by Nihon Silica Co., Ltd.; Nip sil VN 3 (5) Produced by Kayaku Akzo Co., Ltd.; Organic peroxide crosslinking agent (di-tert-butyl peroxy di-isopropylbenzene) (6) Produced by Ohuch Shinko Chemical Co., Ltd.; N,N' -m-phenylenedimaleimide (7) Produced by Uniroyal Chem Co., Ltd.; Naugard 445 (8) Produced by Asahi Denka Kogyo Co., Ltd.; Trimellic acid ester plasticizer C - 9N (9) Produced by Shiroishi Kogyo Co., Ltd.; Hakuenka CC (fatty acid treated calcium carbonate) (10)Produced by Shiroishi Kogyo Co., Ltd.; Silver W | | | | |

Based on the formulation or compounding in the above-mentioned Table 20, evaluations of rubber dimensional stability were performed as follows.

Non-vulcanized rubber: Each formulation or compound was prepared to have a width of 600 mm and a thickness of 2 mm and formed a sheet. Just after the sheet formation, a grain direction of the sheet was set to a longitudinal direction and the opposite grain direction of the sheet was set to a lateral direction and a rectangular article of a longitudinal length of 200 mm and a lateral length of 150 mm was cut. The obtained article was then left on a flat glass plate for 24 hours. The dimensional changes of the obtained articles were compared with each other.

Vulcanized rubber: The above-mentioned sheet was formed to be a vulcanized sheet of a longitudinal length of 200 mm, a lateral length of 150 mm and a thickness of 2 mm under vulcanizing conditions of 160°C for 30 minutes and 150 Kg/cm² with an electrically-heated press. The differences between the longitudinal dimensions and lateral dimensions of a just vulcanized sheet and at 24 hours after vulcanization were measured. The obtained results are shown in Tables 21 and 22.

**Table 21 - Non-vulcanized Rubber (mm)**

| Non-vulcanized rubber | Example (A-2) | Comparative example (B-1) | Comparative example (B-2) |
|---|---|---|---|
| Longitudinal direction (dimensional change of grain direction) | -4.0 | -11.3 | -5.8 |
| Lateral direction (dimensional change of opposite grain direction) | -3.2 | -9.1 | -4.5 |
| Thickness | 0.09 | 0.25 | 0.12 |

**Table 22 - Vulcanized Rubber (mm)**

| Vulcanized rubber | Example (A-2) | Comparative example (B-1) | Comparative example (B-2) |
|---|---|---|---|
| Longitudinal direction (dimensional change of grain direction) | -3.2 | -8.9 | -4.6 |
| Lateral direction (dimensional change of opposite grain direction) | -2.6 | -7.4 | -3.7 |
| Thickness | 0.07 | 0.20 | 0.10 |

The dimensional stability of non-vulcanized rubber influences the workability during manufacturing of the belt and on belt dimension at the finish of the manufacturing. If stability is poor, the manufacturing of a belt of stable dimensions becomes difficult, if not impossible. In contrast, the dimensional stability of vulcanized rubber generates stress on the respective portions of the vulcanized belt such that the belt may be twisted and snaked during traveling. Sample B-1, in which no calcium carbonate is formulated or compounded, shrinks significantly, which results in manufacturing difficulties. Although sample B-2 was significantly improved by the effects of using calcium carbonate, the dimensional stability of the vulcanized belt was insufficient.

When calcium carbonate treated by an organic acid was used as in sample A-2, sufficiently stability is obtained. This may be due to be the fact that the surface of the calcium carbonate is activated by an organic acid, whereby the dispersibility of the rubber is improved as compared to sample B-2. Notably, the formulation or compounding range was defined as 5 to 40 parts because when the range is less than 5 parts, the effect of the dimensional stability is reduced, and when it exceeds 41 parts, the viscosity of the rubber compound is increased too much such that moldability is lowered and rubber strength decreases significantly.

In accordance with the present invention, an organic peroxide may be formulated or compounded in a rubber composition of the belt body rubber layer. Thus, in coloring type formulations or compounds, the effects of the respective co-crosslinking agents were evaluated by the following formulation or compounding. Coloring type formulations or compounds are shown in Table 23.

**Table 23 - Color Formulations**

| | | Comparative example | Example | Example | Example | Example | Comparative Example |
|---|---|---|---|---|---|---|---|
| | | C-1 | A-2 | D-1 | D-2 | D-3 | D-4 |
| Zeoforte 2295 N | (1) | 20 | 20 | 20 | 20 | 20 | 20 |
| Zeoforte 2195 H | (2) | 30 | 30 | 30 | 30 | 30 | 30 |
| VPK8815 | (3) | 50 | 50 | 50 | 50 | 50 | 50 |
| White carbon | (4) | 5 | 5 | 5 | 5 | 5 | 5 |
| Lutile titanium oxide | | 10 | 10 | 10 | 10 | 10 | 10 |
| Perkadox 14 -40C | (5) | 9 | 9 | 9 | 9 | 9 | 9 |
| Surface-treated calcium carbonate | (6) | 15 | 15 | 15 | 15 | 15 | 15 |
| Anti-aging | (7) | 1.5 | 1.5 | 1.5 | 1.5 | 1.5 | 1.5 |
| Stearic acid | | 4 | 4 | 4 | 4 | 4 | 4 |
| Plasticizer | (8) | 4 | 4 | 4 | 4 | 4 | 4 |
| Sulfur | | 0.2 | 0.2 | 0.2 | 0.2 | 0.2 | 0.2 |
| Vulnoc PM | (9) | | 1.00 | | | | 4.00 |
| San-Ester EG | (10) | | | 1.48 | | | |
| San-Ester TMP | (11) | | | | 1.68 | | |
| Taiku | (12) | | | | | 1.24 | |

| | | | | | | | |
|---|---|---|---|---|---|---|---|
| (1) Produced by Nippon Zeon Co., Ltd.; Finely distributed product formed by Base polymer Zetpol2020 and zinc polymethacrylate (2) Produced by Nippon Zeon Co., Ltd.; Finely distributed product formed by Base polymer Zetpo12010H and zinc polymethacrylate (3) Produced by Beier Co., Ltd; Amount of vinyl acetate 60% Ethylene-vinyl acetate copolymer (EVM) in which 100°C at ML1 + 4 is 55 (4) Produced by Nihon Silica Co., Ltd.; Nip sil VN 3 (5) Produced by Kayaku Akzo Co., Ltd.; Organic peroxide crosslinking agent (di-tert-butyl peroxy di-isopropylbenzene) (6) Produced by Shiroishi Kogyo Co., Ltd.; Hakuenka CC (fatty acid treated calcium carbonate) (7) Produced by Uniroyal Chem Co., Ltd.; Naugard 445 (8) Produced by Asahi Denka Kogyo Co., Ltd.; Trimellic acid ester plasticizer C - 9N (9) Produced by Ohuch Shinko Chemical Co., Ltd.; N,N' -m-phenylenedimaleimide (10) Produced by Sanshin Chemical Co., Ltd.; Ethylene dimethacrylate (11)Produced by Sanshin Chemical Co., Ltd.; Trimethylol propane trimetacrylate (12)Produced by Nihon Chemical Co., Ltd.; Triallyl isocyanurate | | | | | | | |

One reason why the formulation or compounding ratios of the respective co-crosslinking agents are different from each other is that the formulation or compounding ratios were determined (as shown in Table 24) by a balance between number of functional groups effective on the crosslinking (number of effective functional groups) and difference between molecular weights. Furthermore, performance of a single rubber composition is shown in Table 25, results of Goodrich Flexometer tests are shown in Tables 26 and 27, and results of load endurance tests are shown in Table 28.

**Table 24 - Crosslinking Agents**

| | | Molecular weight | Number of effective functional groups | Loads or Amount of formulation or compounding | Example of formulation or compounding |
|---|---|---|---|---|---|
| Vulnoc PM | (9) | 268 | 4 | 1.00 | A-2 |
| San-Ester EG | (10) | 198 | 2 | 1.48 | D-1 |
| San-Ester TMP | (11) | 338 | 3 | 1.68 | D-2 |
| Taiku | (12) | 249 | 3 | 1.24 | D-3 |

**Table 25 - Non-vulcanization physical properties, 130°C Mooney scorch**

| | Comparative example | Example | Example | Example | Example | Comparative example |
|---|---|---|---|---|---|---|
| Formulation No. | C-1 | A-2 | D-1 | D-2 | D-3 | D-4 |
| Vm | 25 | 25 | 23 | 22 | 23 | 41 |
| t5(min) | 16.6 | 13.0 | 9.1 | 11.4 | 14.3 | 3.7 |

**Table 26 - Goodrich flexometer test (test conditions are the same as in table 4; Atmospheric temperature 40°C, 3 hours)**

| | Comparative example | Example | Example | Example | Example | Comparative example |
|---|---|---|---|---|---|---|
| | C-1 | A-2 | D-1 | D-2 | D-3 | D-4 |
| IDC(%) | 8.4 | 7.3 | 7.4 | 7.4 | 7.7 | Test impossible due to failure of molding |
| ΔC(%) | 0.2 | 0.0 | 0.0 | 0.0 | 0.0 | |
| HBU( ) | 25.8 | 20.0 | 21.6 | 22.4 | 23.4 | |
| PS(%) | 5.8 | 3.1 | 3.2 | 3.2 | 3.6 | |

**Table 27 - Goodrich flexometer test (test conditions are the same as in table 4;Atmospheric temperature 80°C, 3 hours)**

| | Comparative example | Example | Example | Example | Example | Comparative example |
|---|---|---|---|---|---|---|
| | C-1 | A-2 | D-1 | D-2 | D-3 | D-4 |
| IDC(%) | 12.4 | 8.1 | 8.2 | 8.2 | 8.7 | Test impossible due to failure of molding |
| ΔC(%) | 0.6 | 0.0 | 0.0 | 0.0 | 0.0 | |
| HBU( ) | 18.0 | 13.0 | 13.4 | 13.6 | 14.1 | |
| PS(%) | 8.6 | 4.3 | 4.6 | 4.6 | 4.8 | |

**Table 28 - Load endurance test (test conditions are the same as in table 16)**

| | Down time | Failure form | Ratio |
|---|---|---|---|
| C-1 | 810 | Tooth cutting out | 78.5 |
| A-2 | 1032 | **↑** | 100.0 |
| D-1 | 1028 | **↑** | 99.6 |
| D-2 | 1041 | **↑** | 100.9 |
| D-3 | 1018 | **↑** | 98.6 |
| D-4 | - | - | - |

The comparative example C-1, which does not have a co-crosslinking agent, exhibited a reduction in rigidity and in the values of ΔC and PS, which measure dynamic fatigue resistance in the Goodrich Flexometer test. Thus repeated stress in the comparative example (C-1) became worse as compared with those of four samples (A-2, D-1, D-2 and D-3). As evidenced above, the endurance of (C-1) was reduced by about 22% in the load endurance test. This is likely due to the permanent deformation of a tooth by repeated stress applied to the teeth of the belt and, accordingly, appropriate engagement could not be kept, resulting in reduced endurance.

Notably, there is little difference between the respective co-crosslinking agents. Differences between them are particularly described as follows. That is N, N'-m-phenylenedimaleimide (Vulnoc PM) in A-2 is a powder shape with small dispersion and remaining other examples (D-1, D-2 and D-3) are liquid. Thus, in terms of the workability and accuracy, Vulnoc PM is preferred. However, since the three examples are liquid, they have lower Mooney viscosity Vm, whereby moldability of the belt can be expected.

In the performed four examples, an improvement of the dynamic physical properties was found and any use of them improved the belt performance equally. The reason for the formulation or compounding range of 0.5 parts to 5 parts is that in a case of less than 0.5 parts, an improvement of the above-mentioned dynamic properties is small, and formulation of 4 parts shown in the comparative example D-4 makes the scorch time early and early vulcanization is performed such that molding becomes difficult, if not impossible. Further, if molding could be performed, the crosslinking density was increased too largely causing it to exhibit hard and brittle properties. Thus, the range of 4 parts is unsuitable as a belt rubber. It is noted that since the 4 parts in Vulnoc PM corresponds to 5 parts in Sun ester TMP, the formulation or compounding range was set to 0.5 to 5 parts. The test was performed by 4 parts in Vulnoc PM.

While certain of the preferred embodiments of the present invention have been described and specifically exemplified above, it is not intended that the invention be limited to such embodiments. Various modifications may be made thereto without departing from the scope of the present invention, as set forth in the following claims.

## Claims

1. Toothed belt comprising a plurality of teeth portions (4) on at least one surface of a belt body rubber layer (3) and a tooth cloth (6) coated on the surface of said plurality of teeth portions (4),
wherein said belt body rubber layer comprises a plurality of buried core strands (2) in the longitudinal direction of the belt (1),
wherein further said belt body rubber layer (3) comprises a rubber composition comprising a mixed polymer,
the mixed polymer comprising a polymer alloy and an ethylene-vinyl acetate copolymer and a crosslinking by an organic peroxide, the ratio of the polymer alloy to the ethylene-vinyl acetate copolymer being in a range of 5:95 to 95:5 parts by weight,
wherein the polymer alloy comprises zinc polymethacrylate being finely distributed in hydrogenated nitrile rubber,
wherein further
said hydrogenated nitrile rubber has an iodine value of 4 to 56 g,
said polymer alloy has a Mooney value of 70 or more at 100°C,
said ethylene-vinyl acetate copolymer has an amount of vinyl acetate of 40 to 91 % and a Mooney value of 20 to 70 at 100°C, and
said body rubber layer (3) is black or at least one color other than black.

2. Toothed belt according to claim 1, wherein the mixed polymer comprises hydrogenated nitrile rubber, said polymer alloy and said ethylene-vinyl acetate copolymer, wherein the ratio of the hydrogenated nitrile rubber to the polymer alloy being in a range of 80:20 to 5:95 parts by weight.

3. Toothed belt according to claim 1 or 2, wherein said belt body rubber comprises 5 to 40 parts by weight of calcium carbonate, 5 to 20 parts by weight of silica, and 5 to 50 parts by weight of titanium oxide with respect to 100 parts by weight of said mixed polymer, wherein said calcium carbonate is subjected to fatty acid treatment and calcium and magnesium composite carbonate is subjected to resin acid treatment.

4. Toothed belt according to any of claims 1 to 3, wherein said organic peroxide is 0.5 to 5 parts by weight with respect to 100 parts by weight of said mixed polymer, and wherein said organic peroxide is selected from the groups consisting of ethylene dimethacrylate, trimethylolpropane trimethacrylate, N,N'-m-phenylene dimaleimide, and triallyl cyanurate.

## Patentansprüche

1. Zahnriemen, umfassend eine Mehrzahl an Zahnabschnitten (4) auf mindestens einer Oberfläche einer Riemenkörperkautschukschicht (3) und ein auf der Oberfläche der Mehrzahl von Zahnabschnitten (4) aufgebrachtes Zahngewebe (6),
wobei die Riemenkörperkautschukschicht eine Mehrzahl an eingebetteten Kernsträngen (2) in Längsrichtung des Riemens (1) umfasst,
wobei ferner die Riemenkörperkautschukschicht (3) eine Kautschukzusammensetzung, umfassend ein Mischpolymer, umfasst,
wobei das Mischpolymer eine Polymerlegierung und ein Ethylen-Vinylacetat-Copolymer und eine Vernetzung durch ein organisches Peroxid umfasst, wobei das Verhältnis der Polymerlegierung zu dem Ethylen-Vinylacetat-Copolymer im Bereich von 5:95 bis 95:5 Gewichtsteilen liegt,
wobei die Polymerlegierung Zinkpolymethacrylat umfasst, das in hydriertem Nitrilkautschuk fein verteilt ist,
wobei ferner
der hydrierte Nitrilkautschuk einen Iod-Wert von 4 bis 56 g aufweist,
die Polymerlegierung einen Mooney-Wert von 70 oder mehr bei 100 °C aufweist, das Ethylen-Vinylacetat-Copolymer eine Menge an Vinylacetat von 40 bis 91 % und
einen Mooney-Wert von 20 bis 70 bei 100 °C aufweist, und
die Körperkautschukschicht (3) schwarz ist oder mindestens eine andere Farbe als Schwarz aufweist.

2. Zahnriemen nach Anspruch 1, wobei das Mischpolymer hydrierten Nitrilkautschuk, die Polymerlegierung und das Ethylen-Vinylacetat-Copolymer umfasst, wobei das Verhältnis des hydrierten Nitrilkautschuks zu der Polymerlegierung im Bereich von 80:20 bis 5:95 Gewichtsteilen liegt.

3. Zahnriemen nach Anspruch 1 oder 2, wobei der Riemenkörperkautschuk 5 bis 40 Gewichtsteile Calciumcarbonat, 5 bis 20 Gewichtsteile Silica und 5 bis 50 Gewichtsteile Titanoxid in Bezug auf 100 Gewichtsteile des Mischpolymers umfasst,
wobei das Calciumcarbonat einer Fettsäurebehandlung und das Calcium- und Magnesiumkompositcarbonat einer Harzsäurebehandlung unterzogen wurde.

4. Zahnriemen nach einem der Ansprüche 1 bis 3, wobei das organische Peroxid 0,5 bis 5 Gewichtsteile in Bezug auf 100 Gewichtsteile des Mischpolymers umfasst, und
wobei das organische Peroxid ausgewählt ist aus der Gruppe, bestehend aus Ethylendimethacrylat, Trimethylolpropantrimethacrylat, N,N'-m-Phenylendimaleimid und Triallylcyanurat.

## Revendications

1. Courroie dentée comprenant une pluralité de parties formant dents (4) sur au moins une surface d'une couche en caoutchouc de corps de courroie (3) et une toile formant dents (6) revêtant la surface de ladite pluralité de parties formant dents (4), dans laquelle ladite couche en caoutchouc de corps de courroie comprend une pluralité de fils centraux noyés (2) dans la direction longitudinale de la courroie (1), dans laquelle en outre ladite couche en caoutchouc de corps de courroie (3) comprend une composition de caoutchouc comprenant un polymère mélangé,
le polymère mélangé comprenant un alliage polymère et un copolymère d'éthylène-acétate de vinyle et une réticulation par un péroxyde organique, le rapport de l'alliage polymère sur le copolymère d'éthylène-acétate de vinyle étant dans une plage de 5:95 à 95:5 parts en poids,
dans laquelle l'alliage polymère comprend le polyméthacrylate de zinc étant finement réparti dans un caoutchouc nitrile hydrogéné,
dans lequel en outre
ledit caoutchouc nitrile hydrogéné a un indice d'iode de 4 à 56 g,
ledit alliage polymère a une valeur de Mooney de 70 ou plus à 100°C,
ledit copolymère d'éthylène-acétate de vinyle a une quantité d'acétate de vinyle de 40 à 91 % et une valeur de Mooney de 20 à 70 à 100°C, et
ladite couche en caoutchouc du corps (3) est noire ou au moins d'une couleur autre que le noir.

2. Courroie dentée selon la revendication 1, dans laquelle le polymère mélangé comprend du caoutchouc nitrile hydrogéné, ledit alliage polymère et ledit copolymère d'éthylène-acétate de vinyle, dans laquelle le rapport du caoutchouc nitrile hydrogéné sur l'alliage polymère est dans une plage de 80:20 à 5:95 parts en poids.

3. Courroie dentée selon la revendication 1 ou 2, dans laquelle ledit caoutchouc du corps de courroie comprend 5 à 40 parts en poids de carbonate de calcium, 5 à 20 parts en poids de silice, et 5 à 50 parts en poids d'oxyde de titane par rapport à 100 parts en poids dudit polymère mélangé, dans laquelle ledit carbonate de calcium est soumis à un traitement aux acides gras et ledit carbonate composite de calcium et de magnésium est soumis à un traitement aux acides résiniques.

4. Courroie dentée selon l'une quelconque des revendications 1 à 3, dans laquelle ledit peroxyde organique est de 0,5 à 5 parts en poids par rapport à 100 parts en poids dudit polymère mélangé, et dans laquelle ledit peroxyde organique est choisi dans les groupes comprenant le diméthacrylate d'éthylène, le triméthacrylate de triméthylolpropane, le dimaleimide de N,N'-m-phénylène et le cyanurate de triallyle.
